# EUROPEAN PATENT SPECIFICATION

(11) **EP 0 818 142 B1**
(45) Date of publication and mention of the grant of the patent: **28.03.2001**
(21) Application number: 97500114.0
(22) Date of filing: 02.07.1997
(51) Int. Cl.: A01M 15/00, A01M 21/04

(54) **Weed-killing device by combustion**
Verbrennungsunkrautbekämpfungsgerät
Appareil de désherbage par combustion

(30) Priority: 12.07.1996 ES 9601573
(43) Date of publication of application: 14.01.1998
(73) Proprietor: Rojas Gomariz, Luis, 46419 Mareny de Barraquetes (Valencia) (ES); Mendoza Primo, Juan, 46240 Carlet (Valencia) (ES)
(72) Inventor: Rojas Gomariz, Luis, 46419 Mareny de Barraquetes (Valencia) (ES); Mendoza Primo, Juan, 46240 Carlet (Valencia) (ES)
(74) Representative: Flaccus, Rolf-Dieter, Dr.

(56) References cited:
- CH-A- 663 319
- FR-A- 1 304 362
- US-A- 2 012 521
- US-A- 2 548 196

## Description

### OBJECT OF THE INVENTION

The object to which the invention applies consists of a **weed-killing device by combustion,** i.e. by directly applying the flame of suitable pressurised liquid gas burners onto the weeds that are to be eliminated, as disclosed e.g. FR-A-1304362.

### BACKGROUND OF THE INVENTION

There are many known devices for applying selective biochemical weed-killers in suspensions or emulsions in suitable liquid means, sprayed under the pressure generated by means of a lift-and-force pump manually driven by an articulated lever located in the weed-killer container, usually in the form of and arranged as a knapsack.

Treatments of this kind pose a number of drawbacks, inter alia as follows:
a) - The selective character of the weed-killer, which limits the destructive effects for certain plant families.
b) - The environmental impact due to the lasting effects of the weed-killer, which may contaminate crops for human consumption, with the resulting harmful consequences.
c) - The application effort required, since the spray lance must be handled simultaneously with the pressure pump lever.
d) - The delay between the application of the weed-killer and the obtaining of appreciable results.

### DESCRIPTION OF THE INVENTION

The purpose of the invention subject is to eliminate the disadvantages peculiar to the known process, as described above, having been devised and designed with this objective in mind.

In so doing, the philosophy of methods used heretofore has been fully dispensed with, for the claimed process employs no biochemical products nor does it require manual generation of pressure.

It essentially comprises directly applying the flame produced in a variable number of pressurised liquid gas burners, symmetrically arranged in a row on a collecting and distribution tube, which is supplied through a central tube, the end of which opposite the collector has a branching with respective shut-off valves that extend into elastic lines leading to pressurised liquid gas cylinders which may be carried by means of suitable harnesses on the user's back.

The device may obviously be singular, i.e. having a single shut-off valve, an elastic line and a pressurised liquid gas cylinder or container.

The central supply tube has a substantially cylindrical handle, with its axis perpendicular to the longitudinal axis of the tube; and, optionally, an open annular means to support the forearm.

The claimed device described above removes the disadvantages peculiar to the known spray system, for it eliminates all weeds, does not affect the environment, has no contaminating effects, requires no great efforts to be applied and has immediate weed-killing effects.

### BRIEF DESCRIPTION OF THE DRAWINGS

To complete the description of the invention and provide an easier understanding of its formal, structural and functional characteristics, drawings are attached which schematically show different features of a preferred embodiment of the weed-killing device by combustion being the object of the invention.

In said drawings:

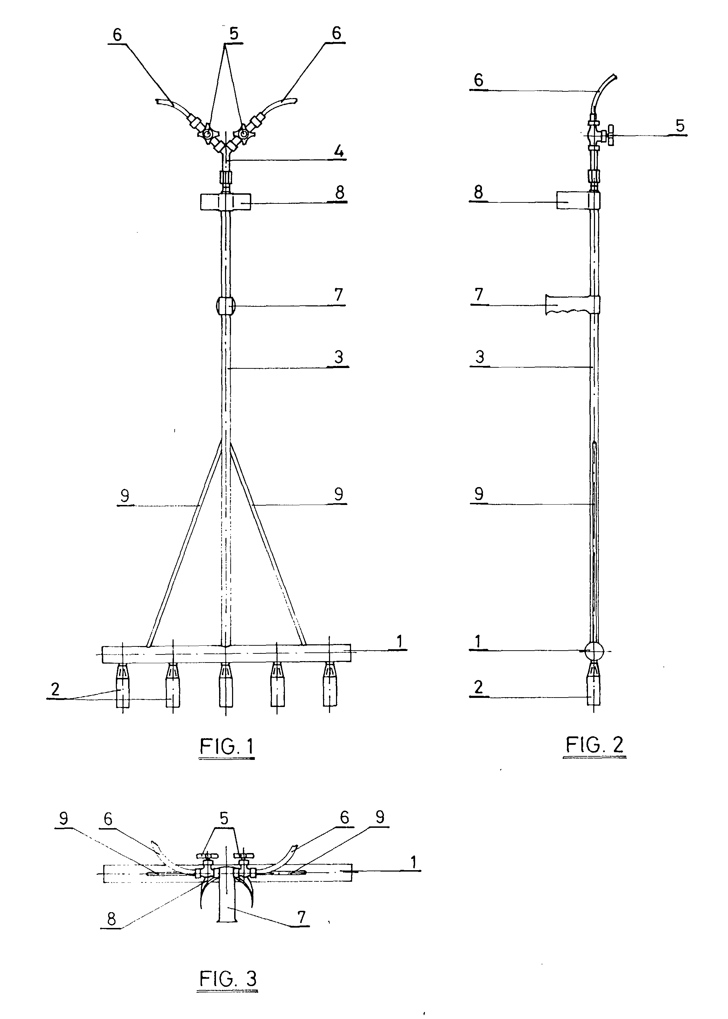

Figure 1 represents a front elevation view of the device;
Figure 2 shows a side elevation or profile thereof;
Figure 3 is a plan view.

### DESCRIPTION OF A PREFERRED EMBODIMENT

In order to clearly show the nature and scope of the advantageous application of the weed-killing device by combustion subject of the invention, its structure and operation are described hereinafter with reference to the drawings which show a preferred embodiment.

A collecting and distribution tube (1) has a variable number (say five as in the Figures) of pressurised liquid gas burners (2) symmetrically arranged in a row, said tube being supplied through a rigid central tube (3) having a branching (4) on its end opposite the collector, with respective shut-off valves (5) that extend into elastic lines (6) leading to pressurised liquid gas cylinders that may be carried on the user's back by means of suitable harnesses.

The stiff central tube (3) has a handle (7) that is substantially cylindrical in shape, with its axis perpendicular to the plane defined by the longitudinal axes of the central (3) and collecting (1) tubes, and an open annular means (8) of suitable diameter and position to support the user's forearm.

In order to rigidise the whole assembly, two bracing rods (9) are arranged symmetrically to the central tube (3), with their top ends welded to diametrically opposed points on the central tube (3) and their bottom ends to points on the collecting tube (1) that are equidistant from its connection to the central tube (3).

## Claims

1. A weed-killing device by combustion, comprising a variable number of pressurised liquid gas burners (2) which are symmetrically arranged with respect of a rigid central supply tube (3) in a row on a collecting and distribution tube (1), whereby the rigid central tube (3) is provided, at the end opposite the collecting tube (1), with a branching (4) having respective shut-off valves (5) that extend into elastic lines (6) leading to pressurised liquid gas cylinders that are portable on the user's back by means of suitable harnesses.

2. A weed-killing device by combustion, as in claim 1, essentially **characterised** in that the rigid central tube (3) has a handle (7) that is substantially cylindrical in shape, with its axis perpendicular to the plane defined by the longitudinal axes of the central and collecting tubes (3 and 1), and an open annular means (8) having a suitable diameter and position to support a user's forearm.

3. A weed-killing device by combustion, as in claim 1, essentially **characterised** in that in order to rigidise the whole assembly, two bracing rods (9) are arranged symmetrically to the central tube (3), with their top ends welded to diametrically opposed points on the central tube (3) and their bottom ends to points on the collecting tube (1) that are equidistant from its connection to the central tube (3)

## Patentansprüche

1. Verbrennungsunkrautbekämpfungsgerät, umfassend eine variierende Anzahl von Flüssiggasbrennern (2), die bezogen auf ein starres, zentrales Versorgungsrohr (3) symmetrisch angeordnet sind, in einer Reihe auf einem Sammel- und Verteilerrohr (1), wobei das starre Zentralrohr (3), an dem dem Sammelrohr (1) gegenüberliegenden Ende mit einem Verteiler (6) versehen ist, der, jeweils mit Absperrventilen (5) versehen, in elastische Leitungen (6) mündet, die zu einem Druckgasbehälter führen, der auf dem Rücken des Benutzers mittels eines geeigneten Geschirrs tragbar ist.

2. Verbrennungsunkrautbekämpfungsgerät gemäß Anspruch 1, dadurch gekennzeichnet, daß das starre Zentralrohr (3) einen Griff (7) hat, der im wesentlichen von zylindrischer Form ist, mit seiner Achse senkrecht auf den Ebenen stehend, die durch die Längsachsen des Zentralrohrs (3) und des Sammelrohrs (1) bestimmt werden, und ein offen ringförmiges Hilfsmittel (8) mit geeignetem Durchmesser und geeigneter Position, um den Unterarm des Benutzers zu unterstützen.

3. Verbrennungsunkrautbekämpfungsgerät gemäß Anspruch 1, dadurch gekennzeichnet, daß, um den gesamten Aufbau zu stabilisieren, zwei Streben (9) symmetrisch zum Zentralrohr (3) angeordnet sind, mit ihren oberen Enden an diametral einander gegenüberliegenden Punkten des Zentralrohrs (3) angeschweißt sind und mit ihren unteren Enden an Punkte am Sammelrohr (1), die gleich weit von dessen Verbindung zum Zentralrohr (3) entfernt sind.

## Revendications

1. Appareil de désherbage par combustion, comprenant un nombre variable de brûleurs (2) à gaz liquide sous pression qui sont agencés en rangée sur un tube (1) de collecte et de répartition, symétriquement par rapport à un tube central d'alimentation rigide (3), dans lequel le tube central rigide (3) est doté à l'extrémité opposée au tube de collecte (1) d'une ramification (4) qui présente des vannes de fermeture (5) respectives qui se prolongent en conduits élastiques (6) qui conduisent à des cylindres à gaz liquide sous pression qui peuvent être portés sur le dos de l'utilisateur au moyen de harnais appropriés.

2. Appareil de désherbage par combustion selon la revendication 1, essentiellement caractérisé en ce que le tube central rigide (3) présente une poignée (7) de forme essentiellement cylindrique dont l'axe est perpendiculaire au plan défini par les axes longitudinaux du tube central et du tube de collecte (3 et 1) et un moyen annulaire ouvert (8) présentant un diamètre approprié et positionné de manière à soutenir l'avant-bras d'un utilisateur.

3. Appareil de désherbage par combustion selon la revendication 1, essentiellement caractérisé en ce que, pour rigidifier la totalité de l'ensemble, deux entretoises (9) sont agencées symétriquement par rapport au tube central (3), leur extrémité supérieure étant soudée en des points diamétralement opposés du tube central (3) et leur extrémité inférieure en des points situés sur le tube de collecte (1) à équidistance de sa connexion au tube central (3).
